# EUROPEAN PATENT APPLICATION

(11) **EP 4 597 034 A1**
(43) Date of publication of application: **06.08.2025**
(21) Application number: 23871457.0
(22) Date of filing: 02.08.2023
(51) Int. Cl.: G01C 15/00, G01S 17/42

(54) **LASER SCANNING DEVICE, LASER SCANNING METHOD AND LASER SCANNING PROGRAM**

(30) Priority: 29.09.2022 JP 2022156148
(71) Applicant: Topcon Corporation, Tokyo 174-8580 (JP)
(72) Inventor: SUGIMOTO, Hiroaki, Tokyo 174-8580 (JP); MINAMIGUCHI, Shuichi, Tokyo 174-8580 (JP)
(74) Representative: Schmitt-Nilson Schraud Waibel Wohlfrom Patentanwälte Partnerschaft mbB
(86) International application number: PCT/JP2023/028347
(87) International publication number: WO 2024/070215

(57) **Abstract**

Appropriate scanning conditions are set in laser scanning. A laser scanning device 200 performing laser scanning by laser scanning light, obtains distance from the laser scanning device 200 to the reflecting prisms 300 and 400 being object, and sets conditions for obtaining laser scanning data limited to the reflecting prisms 300 and 400. During this, the laser scan data which is limited to the reflecting prisms 300 and 400 is laser scan data of a specific angle range viewed from the laser scanning device 200, and the specific angle range is set to be relatively narrow in a case in which the distance is relatively long, and is set to be relatively wide in a case in which the distance is relatively short.

## Description

### Technical Field

The present invention relates to a surveying technique.

### Background Art

A laser scanning device is known (For example, see Patent document 1).

The Patent Document 1 : Japanese Patent No. 2926521

### Summary of the Invention

The present invention relates to a technique to perform setting of scanning conditions appropriate for laser scanning.

The present invention is a laser scanning device including: a distance obtaining unit which obtains distance from the laser scanning device to a specific object, and a condition setting unit which performs setting of conditions to obtain laser scan data which is limited to the specific object, in which the laser scan data which is limited to the specific object is laser scan data of a specific angle range viewed from the laser scanning device, and the specific angle range is set to be relatively narrow in a case in which the distance is relatively long, and is set to be relatively wide in a case in which the distance is relatively short.

In the present invention, an aspect may be mentioned in which conditions are set so that laser scanning density in a unit angle range is set to be relatively large in a case in which the distance is relatively long, and laser scanning density in a unit angle range is set to be relatively small in a case in which the distance is relatively short.

In the present invention, an aspect may be mentioned in which the device further includes: a horizontal rotating unit which rotates horizontally; and a vertical rotating unit which is arranged on the horizontal rotating unit, rotates vertically around horizontal direction regarding rotating axis, and includes an optical unit which irradiates laser scanning light to outside; in which the specific angle range includes angle range of horizontal direction, the angle range of horizontal direction is adjusted based on position in vertical angle direction of the specific object, and in the adjustment, the angle range of horizontal direction is enlarged in a case in which the position in vertical angle direction of the specific object is relatively high vertical angle position compared to a case in which the position in vertical angle direction of the specific object is relatively low vertical angle position.

In the present invention, an aspect may be mentioned in which laser scanning light which is output from the laser scanning device has a cross-sectional shape of longitudinal shape, the laser scanning light performs laser scanning by being reflected by a rotating mirror, the cross-sectional shape of the laser scanning light is rotated depending on direction to which the laser scanning light is reflected by the mirror, and conditions for obtaining the laser scan data are set depending on the direction to which laser scanning light is reflected by the mirror.

The present invention is a laser scanning method using a laser scanning device, including steps of: obtaining distance from the laser scanning device to a specific object, and setting conditions to obtain laser scan data which is limited to the specific object, in which the laser scan data which is limited to the specific object is laser scan data of a specific angle range viewed from the laser scanning device, and the specific angle range is set to be relatively narrow in a case in which the distance is relatively long, and is set to be relatively wide in a case in which the distance is relatively short.

The present invention is a program for control of laser scanning by a laser scanning device made to, when read and executed by a computer processor, cause the computer processor to: obtain distance from the laser scanning device to a specific object, and set conditions to obtain laser scan data which is limited to the specific object, in which the laser scan data which is limited to the specific object is laser scan data of a specific angle range viewed from the laser scanning device, and the specific angle range is set to be relatively narrow in a case in which the distance is relatively long, and is set to be relatively wide in a case in which the distance is relatively short.

### Effect of the Invention

According to the present invention, the technique is obtained in which appropriate scanning conditions are set in laser scanning.

### Brief Description of Drawings

Fig. 1 is an overview diagram of the Embodiment.
Fig. 2 is an external view showing a laser scanner.
Fig. 3 is conceptual diagrams (A) and (B) of an optical system.
Fig. 4 is a block diagram showing the laser scanning device.
Fig. 5 is a principle diagram explaining principle of changing in scanning range depending on distance.
Fig. 6 is a principle diagram explaining principle of rotation of flat beam cross section of laser scanning light.
Fig. 7 is a principle diagram explaining principle of rotation of flat beam cross section of laser scanning light.
Fig. 8 is a conceptual diagram showing condition of rotation of flat beam cross section of laser scanning light.
Fig. 9 is a conceptual diagram showing condition in which scanning range is reduced as vertical angle becomes higher.
Fig. 10 is a conceptual diagram showing scanning range near vertex.
Fig. 11 is a graph showing relationship between angle range depending on distance and scanning rate.
Fig. 12 is a flowchart diagram showing one example of steps of processing.

### Embodiments of the Invention

### 1. First Embodiment

### (Summary)

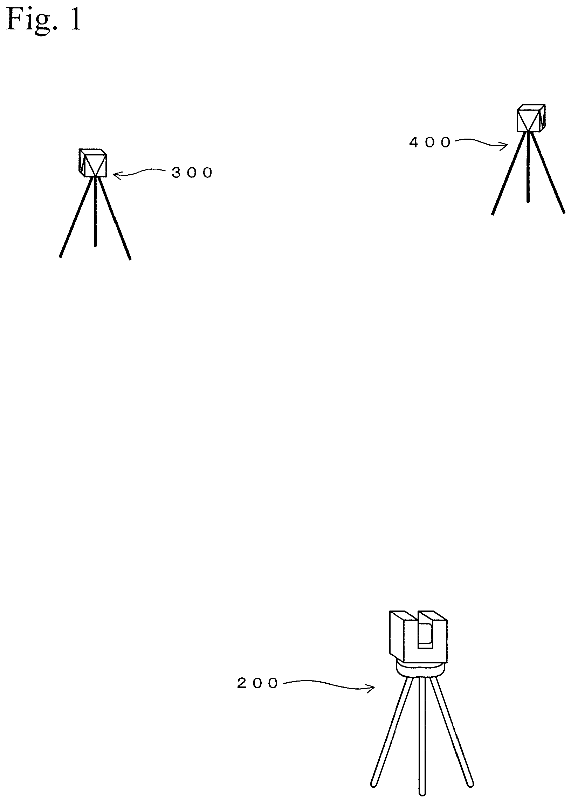

Fig. 1 shows a situation in which a laser scanning device 200 and reflecting prisms 300 and 400 being target are arranged on a site where point cloud data is needed to be obtained. The reflecting prisms 300 and 400 are arranged at points of which positions in the absolute coordinate system are known. The absolute coordinate system is a coordinate system which is used in maps or GNSS. It should be noted that a local coordinate system can be used as the coordinate system.

In Fig. 1, any objects of scanning other than the reflecting prism are omitted; however, in actual scanning, an object of laser scanning (for example, a ground form or a building) may exist in addition to the reflecting prism.

The reflecting prisms 300 and 400 reflect incident light changing the direction by 180 degrees. One which is commercially available for surveying is used as the reflecting prisms 300 and 400. Other than the reflecting prism, other reflecting member such as a retroreflecting member may be used.

The laser scanning device 200 is arranged at a position appropriate for laser scanning, the position and orientation thereof in the absolute coordinate system are unknown. In this example, the laser scanning device 200 performs first laser scanning of a wide range (for example, all-circumferential scanning) and second laser scanning focusing on the reflecting prism.

Here, point cloud data of wide range is obtained by the first laser scanning, the position of each point in the absolute coordinate system is unknown at this step. This is because the position and orientation of the laser scanning device 200 in the absolute coordinate system are unknown.

Then, positioning of the reflecting prisms 300 and 400 which are arranged at known points in the absolute coordinate system is performed by the second laser scanning, and the position and orientation of the laser scanning device 200 in the absolute coordinate system are calculated by the backward intersection method

If the position and orientation of the laser scanning device 200 in the absolute coordinate system become obvious, a coordinate in the absolute coordinate system is imparted to the point cloud data which is obtained in the first laser scanning, and therefore, point cloud data in the absolute coordinate system is obtained. It should be noted that the number of the reflecting prism can be three or more.

In the first laser scanning, since reflected light from the reflecting prisms 300 and 400 is too intense, a light receiving unit 202 of the laser scanning device 200 may be saturated, and ranging accuracy of the reflecting prisms 300 and 400 may be deteriorated. That is, in the first laser scanning, positioning accuracy of the reflecting prisms 300 and 400 may be deteriorated.

Then, the second laser scanning is performed in order to perform positioning the reflecting prisms 300 and 400 accurately. During this, input level of a ranging light into a light receiving element is weakened by using a variable optical attenuator in order to obtain high positioning accuracy. This controlling of the variable optical attenuator is performed based on light receiving intensity and distance information of the reflecting prisms which are obtained in the first laser scanning.

It should be noted that the saturation due to intense input in the light receiving unit 202 mainly occurs in the light receiving element. If degree of the saturation is small, although output may be distorted or peaked out in the light receiving element, accuracy of ranging may be maintained. However, if degree of the saturation is large, distortion in wave shape of output of the light receiving element may be significant, there may be an error in measurement of distance using phase difference of wave shape and accuracy of ranging may be deteriorated.

The second scanning is performed under condition in which accuracy of later ranging is not adversely affected (condition in which accuracy of ranging is maintained). Practically, the optical attenuator is inserted on an optical path as mentioned above, so as not to saturate the light receiving element. It should be noted that the optical attenuator is arranged in one or both of light emitting optical system and light receiving optical system. Usually, the optical attenuator is arranged in one of the optical systems. In addition, a method is also possible in which light emitting intensity of the light emitting element is weakened.

A distance from the laser scanning device 200 to the reflecting prism 300 and a distance from the laser scanning device 200 to the reflecting prism 400 are obtained from the results of the first laser scanning. Although these distances may include error, based on the distances, conditions to obtain laser scanning data which is limited to the reflecting prisms 300 and 400 are set. During this, the laser scanning data which is limited to the reflecting prisms 300 and 400 is laser scanning data of a specific angle range which is viewed from the laser scanning device 200. This specific angle range is set to be relatively narrow in a case in which the distance is relatively long, and is set to be relatively wide in a case in which the distance is relatively short.

### (Construction of hardware)

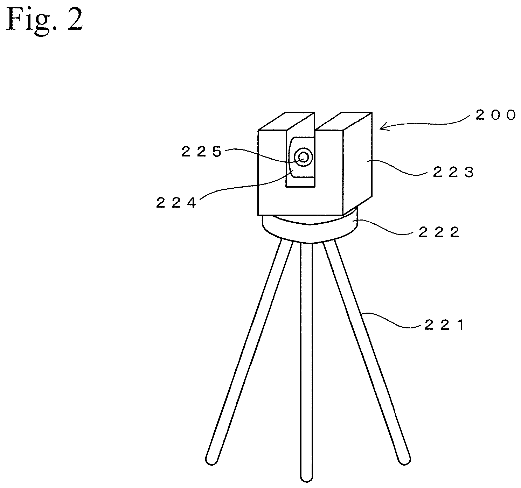

Fig. 2 shows an exterior appearance of the laser scanning device (laser scanner) 200. The laser scanning device 200 includes a tripod 221, a base unit 222 which is fixed on an upper part of the tripod 221, a horizontal rotating unit 223 which is a rotating body possibly rotating horizontally on the base unit 222, and a vertical rotating unit 224 which is a rotating body possibly rotating vertically with respect to the horizontal rotating unit 223. The laser scanning device 200 is operated by a wirelessly connected external controller (operation terminal) which is not shown.

The vertical rotating unit 224 includes an optical unit 225 which emits and receives laser scanning light. The optical unit 225 emits laser scanning light (ranging light) as pulsing light. While the vertical rotating unit 224 rotates, this pulsing light emission is performed along a direction perpendicular (vertical surface) to the rotating axis (axis elongating to horizontal direction). In this case, laser scanning light is emitted as pulsing light along direction of vertical angle (elevation angle and depression angle direction) from the optical unit 225. It should be noted that the vertical angle is measured as 0° regarding horizontal direction and measured as 90° regarding vertical direction.

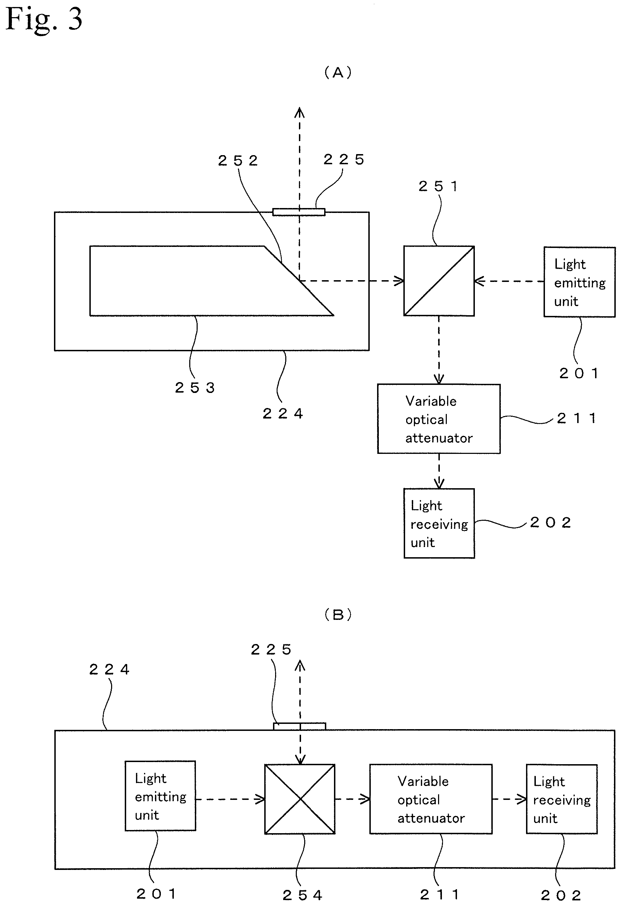

Two kinds can be mentioned as a structure of optical system. Fig. 3 (A) is a conceptual diagram of first structure. In this example, laser scanning light which is emitted from the light emitting unit 201 is irradiated to an oblique mirror 252 via an optical combining/splitting unit 251. The oblique mirror 252 is arranged on top of the vertical rotating member 253 having circular cylindrical shape, at an angle of oblique 45°. The vertical rotating member 253 rotates vertically in a fashion integrated with the vertical rotating unit 224, around an axis matching to an optical axis of the light emitting unit 201 (axis elongating to horizontal direction) regarding as a rotating axis.

While rotating the vertical rotating member 224, laser scanning light is emitted as pulsing light from the light emitting unit 201 so that vertical scanning along vertical surface is performed. Scanning light which is reflected from an object travels along opposite route, passes the oblique mirror surface 252, the optical combining/splitting unit 251 and the variable optical attenuator 211 in this order, and finally is received at the light receiving unit 202. In this structure, the light emitting unit 201 and the light receiving unit 202 are fixed inside of the horizontal rotating unit 223 and do not rotate vertically.

Fig. 3 (B) shows second structure of the optical system. In this case, the light emitting unit 201, the light receiving unit 202 and the optical combining/splitting unit 254 rotate vertically in a fashion integrated with the vertical rotating unit 224. Either structure Fig. 3(A) or Fig. 3(B) can be employed.

By rotating the horizontal rotating unit 223 horizontally, rotating the vertical rotating unit 224 vertically, emitting laser scanning light as pulsing light from the optical unit 225, and receiving the reflected light thereof from an object at the optical unit 225 simultaneously, laser scanning with respect to circumference can be performed.

By scanning along direction of vertical angle as mentioned above (vertical scanning) and rotating the horizontal rotating unit 223 horizontally at the same time, this scanning line along vertical angle direction (vertical scanning line) moves like shifting along horizontal angle direction (horizontal direction). It should be noted that in a case in which horizontal rotation is simultaneously performed during vertical rotation, scanning along vertical angle direction (vertical scanning line) is not completely along vertical direction, and is a slightly oblique line. Here, if the horizontal rotating unit 223 does not rotate, scanning along vertical angle direction (vertical scanning line) is along vertical direction.

The horizontal rotating unit 223 and the vertical rotating unit 224 rotate by a motor. A horizontal rotating angle of the horizontal rotating unit 223 and a vertical rotating angle of the vertical rotating unit 224 are accurately measured by an encoder.

Each laser scanning light is a line of pulse ranging light, and by one laser scanning light, a scanning point which is a reflecting point of the laser scanning light is ranged. Based on this ranged value and irradiation direction of the laser scanning light, position of the scanning point (reflecting point of laser scanning light) with respect to the laser scanning device 200 can be calculated.

As a construction of point cloud data (laser scan point cloud) which is output from the laser scanning device 200, a construction may be mentioned in which data of distance and direction regarding each point (each scanning point) is output. A construction is also possible in which inside of the laser scanning device 200, position of each point in a specific coordinate system is calculated and three-dimensional coordinate position of each point is output as point cloud data. In addition, the point cloud data also includes information of luminance of each scanning point (intensity of reflected light).

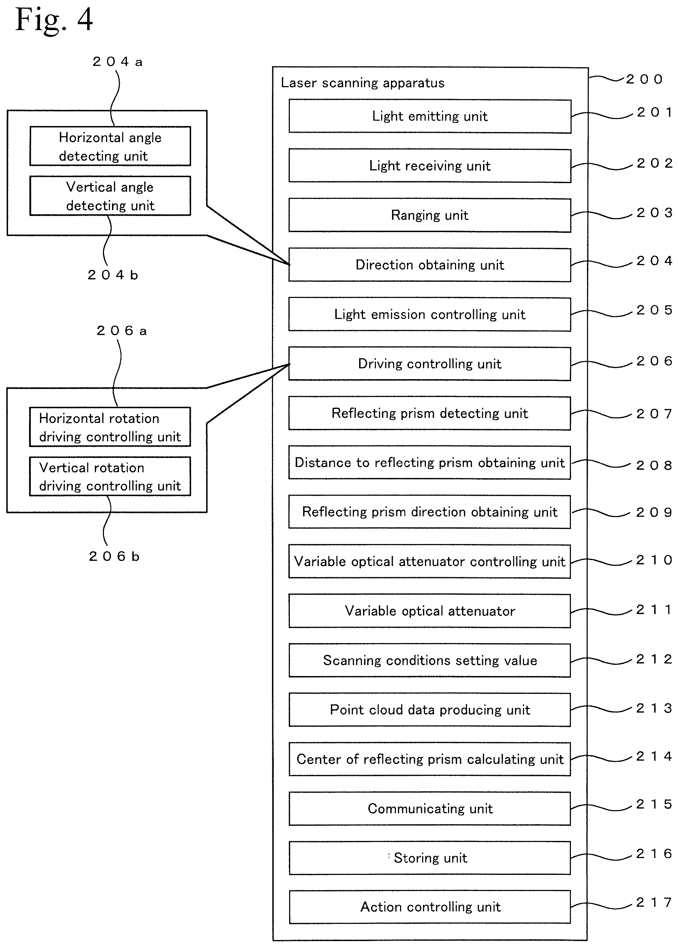

Fig. 4 shows a block diagram of the laser scanning device 200. An embodiment is also possible in which a part of functional units shown in Fig. 4 are constructed separately, and it is attached to the laser scanning device 200. For example, a construction is possible in which a part of functional units shown in Fig. 3 are constructed by a PC (personal computer) or a server, data is sent from the laser scanning device 200 to this PC or server, and data is processed therein.

The laser scanning device 200 includes the light emitting unit 201, the light receiving unit 202, a ranging unit 203, a direction obtaining unit 204, a light emission controlling unit 205, a driving controlling unit 206, a reflecting prism detecting unit 207, a distance to reflecting prism obtaining unit 208, a reflecting prism direction obtaining unit 209, a variable attenuator controlling unit 210, a variable optical attenuator 211, a scanning conditions setting unit 212, a point cloud data producing unit 213, a reflecting prism center calculating unit 214, a communicating unit 215, a storing unit 216, and an action controlling unit 217.

The light emitting unit 201 includes the light emitting element emitting laser scanning light, an optical system related to light emission, and a circumferential circuit. Laser scanning light which emitted from the light emitting unit 201 is output from the optical unit 225 shown in Fig. 2 via the optical combining/splitting unit. The optical combining/splitting unit is an optical system which splits and combines optical path of outgoing light and incident light by using a half mirror or a dichroic mirror.

The light receiving unit 202 includes the light receiving element which receives laser scanning light, an optical system related to light receiving, and a circumferential circuit. Reflected light of laser scanning light introduced from the optical unit 225 is introduced to the optical combining/splitting unit, the variable optical attenuator 211, and furthermore, the light receiving unit 202 (See Fig. 3). The variable optical attenuator is explained below.

The ranging unit 203 calculates distance from the laser scanning device 200 to the reflecting point (scanning point) of laser scanning light based on output of the light receiving unit 202. In this example, a reference optical path is arranged inside of the laser scanning device 200. Laser scanning light which is output from the light emitting element is divided into two ways, and one of them is irradiated from the optical unit 225 to an object as laser scanning light, and the other is introduced into the reference optical path as reference light.

Laser scanning light which is reflected from the object and introduced from the optical unit 225 and the reference light which propagated in the reference optical path are combined and input into the light receiving unit 202. Since propagated distance is different between laser scanning light and reference light, reference light is detected at the light receiving element first, and then laser scanning light is detected at the light receiving unit. Here, with reference to output wave shape of the light receiving element, detected wave shape of reference light is output first, and after a time lag, detected wave shape of laser scanning light is output. From phase difference (time difference) of two wave shapes, distance from the laser scanning device 200 to reflecting point of laser scanning light is calculated. It should be noted that a construction is also possible in which distance is calculated based on flight time of laser scanning light.

The direction obtaining unit 204 obtains direction of optical axis of laser scanning light. The direction of optical axis is obtained by measuring angle of optical axis in horizontal direction (horizontal angle) and angle of optical axis in vertical direction (vertical angle: corresponding to elevation angle or depression angle). The direction obtaining unit 204 includes a horizontal angle detecting unit 204a and a vertical angle detecting unit 204b.

The horizontal angle detecting unit 204a detects horizontal rotating angle of the horizontal rotating unit 223. The horizontal rotation is a rotation around a vertical direction regarding as a rotating axis. Detection of angle is performed by an encoder. The vertical angle detecting unit 204b detects vertical rotating angle (elevation angle or depression angle) of the vertical rotating unit 224. The vertical rotation is a rotation around a horizontal direction regarding as a rotating axis. Detection of angle is performed by the encoder.

By measuring the horizontal rotating angle of the horizontal rotating unit 223 and the vertical rotating angle of the vertical rotating unit 224, direction of optical axis of laser scanning light which is viewed from the laser scanning device 200, that is, direction of scanning point becomes obvious.

The light emission controlling unit 205 controls light emitting timing of laser scanning light in the light emitting unit 201. The driving controlling unit 206 includes a horizontal rotating driving controlling unit 206a for controlling driving for horizontal rotation of the horizontal rotating unit 223 and a vertical rotating driving controlling unit 206b for controlling driving for vertical rotation of the vertical rotating unit 224.

The reflecting prism detecting unit 207 identifies and detects reflected light from the reflecting prism based on output of the light receiving element of the light receiving unit 202 in the first laser scanning. Ranging light which is reflected at the reflecting prism has several orders of magnitude more intense than other reflected light. Using this difference in intensity, the reflected light from the reflecting prism is detected among received reflected lights.

Furthermore, since intensity of reflected light from the reflecting prism is intense, output wave shape of the light receiving element which received reflected light from the reflecting prism shows a saturated wave shape. Practically, top of the wave shape is flattened, and the wave shape is output in a condition having a lasting effect longer than light receiving time. By identifying this peculiar output wave shape, reflected light from the reflecting prism can be detected among many kinds of reflected light.

The distance to reflecting prism obtaining unit 208 obtains distance from the laser scanner 200 to the reflecting prism which is detected by the reflecting prism detecting unit 207. Reflected light from the reflecting prism which is detected by the reflecting prism detecting unit 207 is specified, and the distance is measured by the ranging unit 203. In the first laser scanning, reflected light from the reflecting prism is especially intense, the light receiving element of the light receiving unit 202 is saturated, and accuracy of ranging is deteriorated. Therefore, distance information to the reflecting prism which is obtained by the distance obtaining unit 208 in the first laser scanning contains error.

It should be noted that in the second laser scanning, since intensity of laser scanning light which is input in the light receiving element is adjusted by using the variable optical attenuator 211, distance can be measured accurately. Also in the second laser scanning, determination whether or not a light is the reflected light from the reflecting prism is performed using difference of light receiving intensity.

The reflecting prism direction obtaining unit 209 obtains direction of the reflecting prism from the laser scanner 200 which is detected by the reflecting prism detecting unit 207. This direction is obtained from the direction obtaining unit 204.

The variable optical attenuator controlling unit 210 controls attenuating amount in the variable optical attenuator 211 mentioned below. The variable optical attenuator 211 attenuates incident light in the light receiving unit 202. This attenuating amount (attenuating ratio) is variable. Controls for varying attenuating amount is performed in the variable optical attenuator controlling unit 210 based on light receiving intensity in the light receiving unit 202 and distance to an object which is calculated by the ranging unit 203. This technique is disclosed in Japanese Unexamined Patent Application Publications Nos. 2022-112957 and 2022-112959, for example.

As the variable optical attenuator 211, a type in which transmittance is adjusted by rotating a circular plate having semi-transmissive in which transmittance is set to gradually change along a circumferential direction, a type in which transmittance of liquid crystal is controlled, or the like, may be mentioned. A module of variable optical attenuator is commercially available, and an appropriate one can be selected among them.

Since reflection from the reflecting prism is intense, the light receiving element is saturated and error may occur in ranging value of the reflecting prism in the first laser scanning. For example, according to the inventors' experiment, it is obvious that error of centimeter level may occur in reflected light from the reflecting prism in a laser scanner which can range at an accuracy having error of several millimeter. Although this degree of increase in error results from non-linear action of the light receiving element and is not constant, it may be about several times to ten times of typical measurement error.

By arranging the variable optical attenuator 207 in front of the light receiving unit 202, intensity of light which is input in the light receiving unit 202 is weakened and the above problem due to saturation in the light receiving element is restrained. It should be noted that a construction is also possible in which the variable optical attenuator is arranged in front of the light emitting unit 201.

The scanning condition setting unit 212 sets scanning conditions of the second laser scanning which is focused on the reflecting prism. To avoid redundant laser scanning and obtaining redundant laser scan data, the second laser scanning for accurate positioning of the reflecting prism is performed with respect to a limited range which is focused on direction of the reflecting prism. Setting of the scanning conditions during this is performed in the scanning condition setting unit 212. The scanning conditions include angle range in which scanning data is obtained and scanning density. In the case of this example, the angle range for obtaining scanning data is determined by a range of horizontal angle and a range of vertical range.

The scanning density is a density of scanning with respect to object of scanning. Practically, it is a density of reflecting point. A high scanning density corresponds to a situation in which reflecting points gathered finely and gaps among adjacent reflecting points are small. On the other hand, a low scanning density corresponds to a situation in which distribution of reflecting points is rough (sparse) and gaps among adjacent reflecting points are large.

Controlling of scanning density is performed by varying scanning rate and/or oscillating frequency of pulsing light emission. Since varying oscillating frequency is not general, scanning density is controlled by controlling scanning rate ordinary.

Practically, in order to increase scanning density in horizontal direction, rotation rate of the horizontal rotating unit 223 during scanning is decreased. In a case in which oscillating frequency of the laser scanning light is constant, the number of laser scanning light in a unit angle range in horizontal direction becomes large by slowing rotating rate of the horizontal rotating unit 223, thereby increasing density of scanning point (reflecting point of laser scanning light) in horizontal direction.

By a similar principle, in order to increase scanning density in vertical direction, rotating rate of the vertical rotating unit 224 is decreased during scanning. The opposite tendency is employed in order to decrease scanning density.

The above setting of scanning conditions is determined based on two elements, that is, (Element 1) distance to an object of positioning and (Element 2) vertical angle of the object of positioning.

### (Element 1)

In setting of scanning conditions regarding the element 1, range of vertical angle and range of horizontal angle for obtaining scanning data is controlled corresponding to distance L. Hereinafter it is explained in detail.

It should be noted that scanning of horizontal direction is performed with respect to a limited angle range which includes the predetermined range, and within the range, scanning data of the range of horizontal angle which is set, is obtained as point cloud data (obtaining as data to use).

Regarding a limited scanning range in vertical angle direction, since an operation stopping scanning only in a specific vertical angle range is mechanically difficult, actually, scanning of all circumferential range (vertical rotation 360°) is performed, and data is obtained as point cloud data only in a specific angle range.

In this way, burden to hardware can be reduced, and data region used can be reduced. Of course, a construction is not excluded in which scanning is performed in the specific angle range.

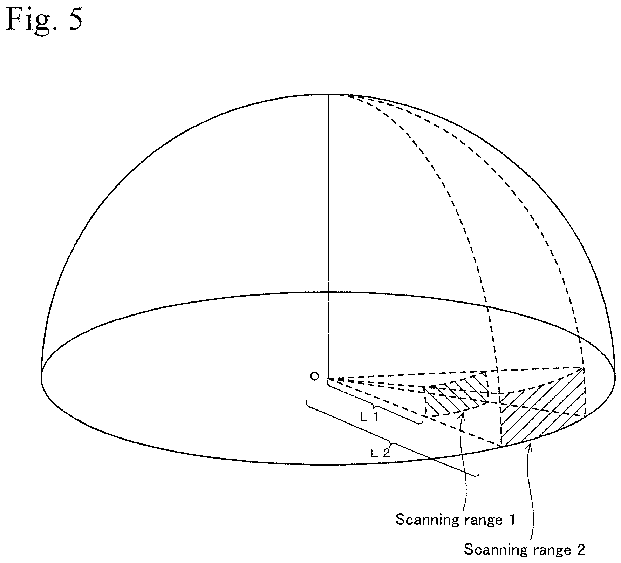

Fig. 5 shows a case in which the laser scanning device is arranged at point O and laser scanning data is obtained limitedly in horizontal angle range and vertical angle range of a certain range. Fig. 5 shows a scanning range 1 in a case in which distance from the laser scanning device is L1 and a scanning range 2 in a case in which distance from the laser scanning device is L2, under conditions of the same horizontal angle range and vertical angle range. As is obvious from comparing the scanning range 1 and the scanning range 2, even if conditions of horizontal angle range and vertical angle range are same, scanning range (area to which scanning is performed) is different since distance is different. Practically, if conditions of horizontal angle range and vertical angle range are same, scanning range may be larger as distance is longer.

Scanning of narrow range (the second scanning) which is for the reflecting prism is set to be performed with respect to a limited scanning range of square of about 10 cm to 1 m around center of position of the reflecting prism which is obtained in the first laser scanning (this includes error due to saturation of the light receiving element).

For example, at a position where there is assumed the reflecting prism is arranged, it is assumed that a range of distance H in horizontal direction and distance V in vertical direction is scanned. In this case, if it is assumed that distance to the reflection prism is L, scanning range in horizontal angle is θ_{H}, and scanning range in vertical angle is θ_{V}. In a case in which angle range is sufficiently small, if Lθ_{H} =H and scanning range in vertical angle is θ_{V}, θ_{H} and θ_{V} should be set so as to satisfy Lθ_{V} =V. As is obvious from this calculation formula, in a case in which V and H are fixed, θ_{H} and θ_{V} can be small value if L is large. There is the opposite tendency if L is small (a case in which distance is close).

Setting of scanning based on the element (1) is performed by the above principle based on distance data L to the reflecting prism which is obtained in the first laser scanning. Practically, the above H and V are imparted, and θ_{H} and θ_{V} are set based on L.

Furthermore, under a condition in which L is large and θ_{H} and θ_{V} are small, scanning rate is slowed. Practically, rotating rate during scanning of at least one of the horizontal rotating unit 223 and the vertical rotating unit 224 is slowed. In this way, decrease in scanning density is suppressed in a place at which L is large.

That is, with respect to an object for which L is large (distance is long), compared to a case in which L is small, decrease in scanning points density is suppressed in a place of distance L by increasing relatively the number of laser scanning lights in a unit angle range.

### (Element 2)

In setting of scanning range regarding the element 2, it is necessary that horizontal angle range of scanning is enlarged proportional to vertical angle. It should be noted that horizontal angle range should be all circumference near the vertex.

In the laser scanning device 200 which is exemplified in Fig. 2 in which horizontal rotation and vertical rotation are combined, even if angle range for deciding scanning range in horizontal direction is the same, an area to be scanned at a specific distance is varied depending on angle of vertical angle.

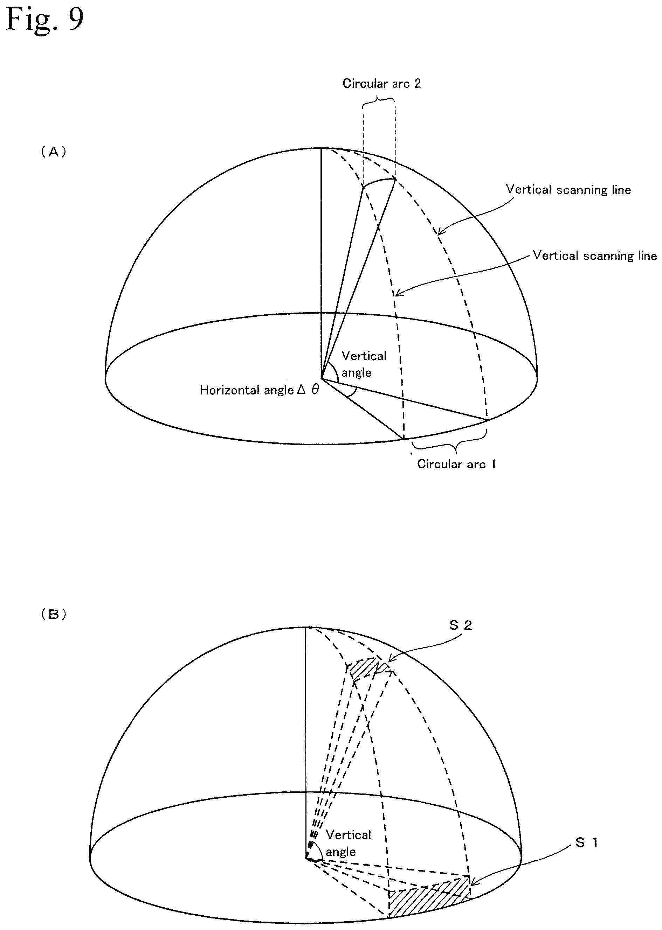

Fig. 9 shows a principle diagram. For example, it is assumed that a specific distance range of horizontal direction (circular arc 1) is set at a specific distance of vertical angle 0° (elevation angle 0°: horizontal direction). Angle range of horizontal angle corresponding to the circular arc 1 is Δθ. It should be noted that vertical angle is defined as 0° for horizontal direction and 90° for vertically upward (vertex).

As shown in Fig. 9(A), in the scanning combining horizontal rotation and vertical rotation, as vertical angle becomes larger, scanning range in horizontal direction corresponding to angle range Δθ of horizontal angle is decreased from range of circular arc 1 to range of circular arc 2. As is obvious from Fig. 9(A), distance of the circular arc 1 is longer than distance of the circular arc 2. As closer to the vertex (vertical angle 90°), distance of circular arc may be shorter. At the vertex (vertical angle 90°), distance of circular arc corresponding to range of horizontal angle may become 0.

That is, in a case in which scanning range Δθ in horizontal angle corresponding to range of the circular arc 1 in horizontal direction is set, as vertical angle becomes higher (higher elevation angle), scanning range considered as distance of horizontal direction becomes narrower. As a result, as shown in Fig. 9(B), in the setting of angle range of same horizontal angle, scanning range may change (be decreased) from S1 to S2 depending on vertical angle.

In the case of Fig. 9(B), during scanning in the setting of same horizontal angle range, if scanning range which is considered as area in horizontal direction (a range almost vertical angle 0°) is S1, at high vertical angle, scanning range which is considered as area is decreased to S2. Compared to S1, the area of S2 is decreased at amount of reduced horizontal direction range (difference between the circular arc 1 and the circular arc 2). That is, the area of scanning range becomes narrow. Therefore, at a place at which vertical angle is large, it is necessary that range of horizontal angle is intendedly enlarged, and difference of the area between S1 and S2 is needed to be corrected.

As an extreme value, in the vertex part (vertical angle = 90°), horizontal angle range should be enlarged to all circumference (360°). For example, in a case in which a circular scanning range exists near the vertex as shown in Fig. 9, data near the vertex can be obtained by rotating horizontal angle at 360° in a range from vertical angle 2 (for example, 85° or the like) to the vertex angle (90°). In that case, by eliminating scan data of a range from vertical angle = 0° to vertical angle 2, appropriate scan data can be obtained.

### (One example of optimization of scanning conditions)

Hereinafter, one example of optimization of scanning conditions considering the above element 1 and element 2 is explained.

Here, a practical example is shown. It should be noted that an object is a reflecting prism. First, from a result of a first laser scanning, point cloud data is extracted based on reflected light from the reflecting prism, and distance L and vertical angle from the laser scanning device 200 to the reflecting prism are obtained. Although this distance L includes error due to intense reflected light, it can be used unproblematically in setting of range of a second laser scanning. The vertical angle is an angle of vertical direction of the reflecting prism which is viewed from the laser scanning device 200. If the reflecting prism is viewed in horizontal direction viewed from the laser scanning device 200, the vertical angle is 0°.

Adjustment regarding the element 1 is performed as follows. Here, scanning range for searching the reflecting prism is Hm in horizontal direction and Vm in vertical direction. This range is preliminarily set based on size of the reflecting prism. For example, in a case in which an appearance size of reflecting surface of the reflecting prism is a circle having diameter of 5 cm, considering an extra size, a range of H = 10 cm and V = 10 cm is set as scanning range. During this, scanning range is determined so that the point which is reflecting center of the reflecting prism obtained in the first laser scanning positions at the center of scanning range.

Here, scanning range of horizontal angle is θ_{H} (rad) and scanning range of vertical angle is θ_{V} (rad). θ_{H} and θ_{V} are calculated so as to satisfy Lθ_{H} = H and Lθ_{V} = V.

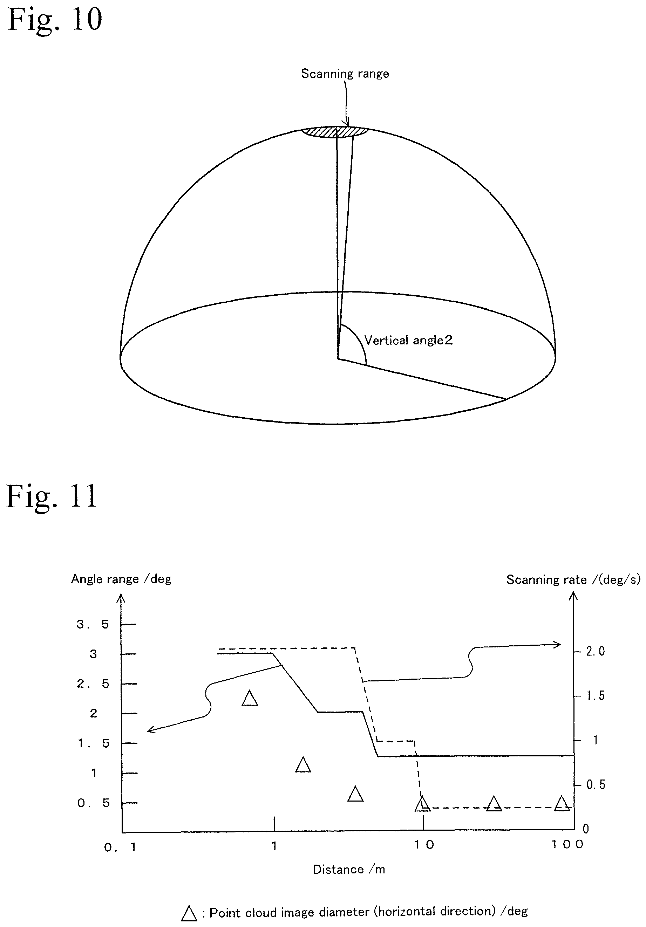

As a simple way, a method may be mentioned in which a correction curve shown in Fig. 11 is preliminarily prepared, and angle range of left vertical axis is selected as θ_{H} (deg) and θ_{V} (deg) depending on distance L. Fig. 11 shows a correction curve in a case in which range of square about 10 cm in vertical and horizontal is selected as scanning range.

Right vertical axis in Fig. 11 is a scanning rate. In setting of scanning rate shown in Fig. 11, as distance L is longer, scanning rate is slowed so as not to reduce scanning density. Scanning rate is controlled by controlling rotating rate of the horizontal rotating unit 223 and the vertical rotating unit 124.

Practically, if rotating rate of horizontal rotation of the horizontal rotating unit 223 is slowed during scanning, scanning density in horizontal direction (density of scanning points) is increased. Furthermore, if rotating rate of vertical rotation of the vertical rotating unit 214 is slowed during scanning, scanning density in vertical direction (density of scanning points) is increased.

Ideally, it is desirable that scanning rate is controlled so as to suppress decrease in scanning density in both of the horizontal rotating unit 223 and the vertical rotating unit 224.

Then, with respect to the result considering the element 1, correction is performed considering the element 2. Regarding the element 2, a correction coefficient k (1 ≤ k) for the circular arc 1 (vertical angle = 0°) in Fig. 9 corresponding to vertical angle is calculated preliminarily, and the above θ_{H} is corrected using this correction coefficient k. The correction coefficient k is increased in proportion to vertical angle.

If vertical angle is increased, corrected value of scanning range in horizontal direction is kθ_{H}. For example, an example may be mentioned in which k is calculated by k = 1/cosθ (θ:vertical angle, but excluding θ =90°). It should be noted that in a case in which vertical angle is 90°, scanning range in horizontal direction is all circumference (360° around horizontal direction, see Fig. 10).

The point cloud data producing unit 213 produces point cloud data based on results of laser scanning. The point cloud data is a data of distance and direction regarding each point (each scanning point) and a data of luminance (intensity of reflected light) of each scanning point.

In this example, limited scanning in horizontal direction is performed by horizontally rotating the horizontal rotating unit 223 in the limited angle range. Actually, considering extra range to some extent, horizontal rotation is performed in a slightly wider range, and among scan data obtained during this, scan data of preliminary determined horizontal angle range is extracted as point cloud data. This predetermined horizontal angle range is set in the scanning condition setting unit 212.

At the same time, scanning in vertical direction is performed while rotating the vertical rotating unit 224 vertically in all circumference. Then, among all circumference scan data which is obtained, scan data of preliminary determined vertical angle range is extracted as point cloud data. This predetermined vertical angle range is set in the scanning condition setting unit 212.

In this way, scan data of horizontal angle range and vertical angle range which is preliminarily determined is extracted as point cloud data. This processing is performed in the point cloud data producing unit 213. Since unnecessary scanning point is not handled as a data, burden for operation is reduced, and data capacity is suppressed from consumed.

The reflecting prism center calculating unit 214 calculates position of reflecting center of the reflecting prism based on point cloud data of the reflecting prism obtained by laser scanning. Practically, position of gravity center is calculated from multiple point cloud data obtained by reflected light from the reflecting prism, and the position is calculated as reflecting center of the reflecting prism. It should be noted that due to accuracy of basic point cloud data, accuracy of positioning of the reflecting prism based on the result of the first laser scanning is relatively low, and accuracy of positioning of the reflecting prism based on the result of the second laser scanning is relatively high.

The communicating unit 215 communicates with an external controller or other device not shown. Communicating is performed using wired or wireless LAN, portable phone lines, and the like. The storing unit 216 is constructed by a semi-conductor memory or hard disk device, and stores action program necessary for action of the laser scanning device 200, data, data resulting from process of action or result of action. The action controlling unit 217 is a computer performing action control of the laser scanning device 200.

### (Explanation regarding cross-sectional shape of scanning light beam)

Hereinafter rotation of cross-sectional shape of laser scanning light (ranging light) beam which generates in a case in which vertical scanning (perpendicular scanning) of Fig. 3(A) is employed is explained. With considering this rotation of cross section of laser scanning light beam, scanning conditions and content of processing of scanning data can be determined.

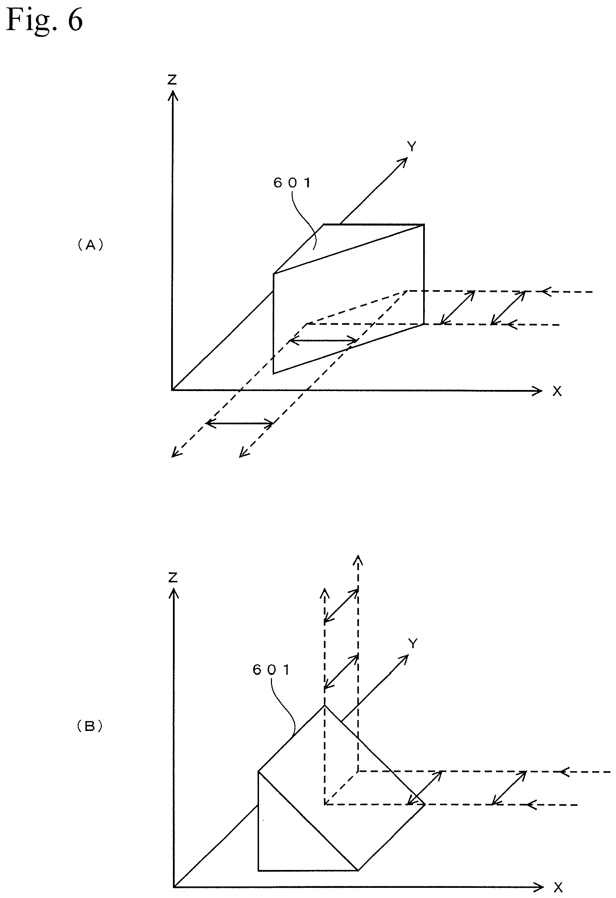

Fig. 6 is a principle diagram showing the principle in which cross-sectional shape of ranging light beam rotates accompanied by rotation of the reflecting mirror. Fig. 6(A) shows a case in which laser scanning light having flattened beam cross section which is longitudinal along Y axis direction enters from positive direction of X axis to the mirror 601. Component of normal vector of reflecting surface of the mirror 601 in this case is (X, Y, Z)=(1,-1, 0). In this case, laser scanning light is reflected to negative Y axis direction by the mirror 601. Longitudinal direction of cross section of this reflected light is X axis direction.

Fig. 6(B) shows a situation in which the mirror 601 is rotated at 90° around X axis as a rotating axis (rotating 90° anticlockwise viewed from negative X axis direction) from the situation in Fig. 6(A).

In the case of Fig. 6B, component of normal vector of reflecting surface of the mirror 601 is (X, Y, Z)=(1, 1, 0). In this case, laser scanning light is reflected to positive Z axis direction by the mirror 601. Longitudinal direction of cross section of this reflected light is Y axis direction as same as incident light.

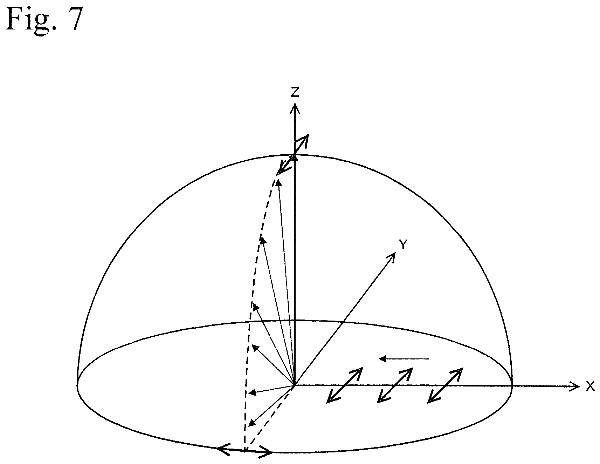

Here, change in longitudinal direction of beam cross section of reflected light during the mirror 601 is rotated little by little from the situation of Fig. 6(A) to the situation of Fig. 6(B), is considered. Fig. 7 shows this situation. As shown in Fig. 7, in a case in which the mirror is rotated and vertical scanning is performed, beam cross section which had longitudinal direction in X axis direction in horizontal direction is rotated accompanied by increasing vertical angle (elevation angle from horizon is increased), and beam cross section has longitudinal direction in Y axis direction at 90° of vertical angle (vertical direction).

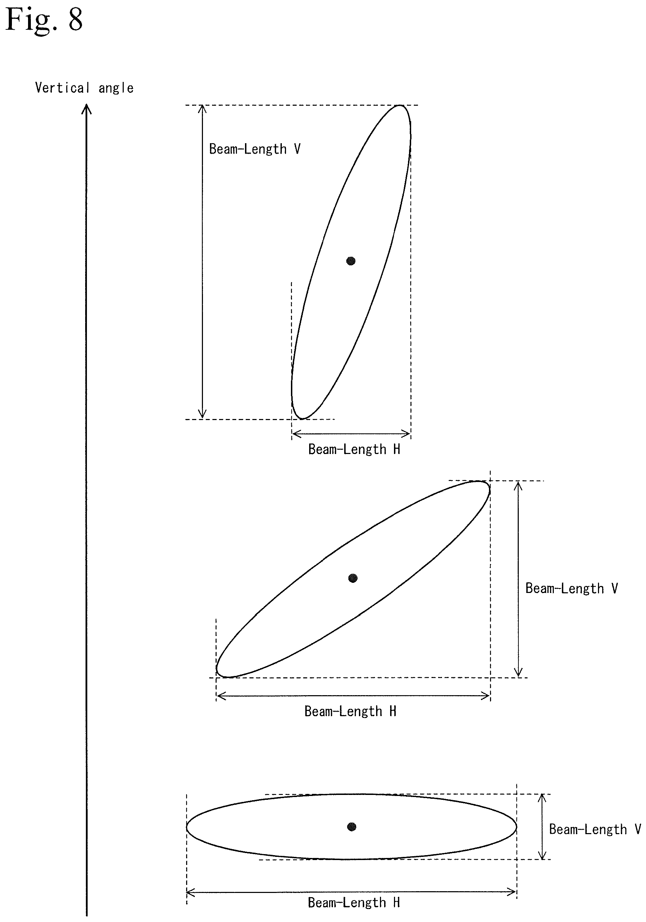

Fig. 8 shows one example of relationship between vertical angle and rotation of beam cross section. Fig. 8 shows a situation in which laser scanning light having elliptic beam cross section is rotated depending on difference of vertical angle. Fig. 8 shows a situation in which elliptic beam having longer axis in horizontal direction at low vertical angle is rotated as vertical angle is increased, and beam size in H direction and beam size in V direction change.

It should be noted that in a case in which cross section of beam which enters into the mirror is circular shape, the above influence of rotation does not occur. In addition, in a case in which cross section of beam which enters into the mirror is square shape, the above influence of rotation occurs in a precise sense; however, it is not a problem in particular.

Hereinafter one example of controlling related to rotation of beam cross section which is exemplified in Figs. 6 to 8 is explained. Here, setting of scanning range in the second laser scanning is considered.

As shown in Fig.8, in a case in which cross section of laser scanning light is longitudinal, beam diameter (size of beam cross section) in V direction and H direction changes depending on vertical angle. Here, for example, in a case in which degree of overlapping of scanning light is optimized at vertical angle 0° (horizontally long beam), there is a possibility that gap along horizontal direction is generated at high vertical angle.

In this case, according to vertical angle position of beam center, scanning density of H direction is increased at high vertical angle. In addition, in this case, since the beam may be vertically long at high vertical angle and excessively overlap in V direction, scanning density of V direction is decreased. Actually, since variation adjustment of scanning rate in V direction is not appropriate, density of point cloud data being obtained is adjusted depending on vertical angle (in other word, adjusting density of eliminating). In this way, scanning density of V direction is controlled.

In addition, in a case in which the beam cross section is vertically long at vertical angle 0° opposite to the case of Fig. 8, since the beam cross section may be horizontally long at high vertical angle, and depending on scanning conditions, there is a possibility that gap is generated in scanning of V direction. In this case, scanning density of V direction is increased at high vertical angle.

### (One example of steps of processing)

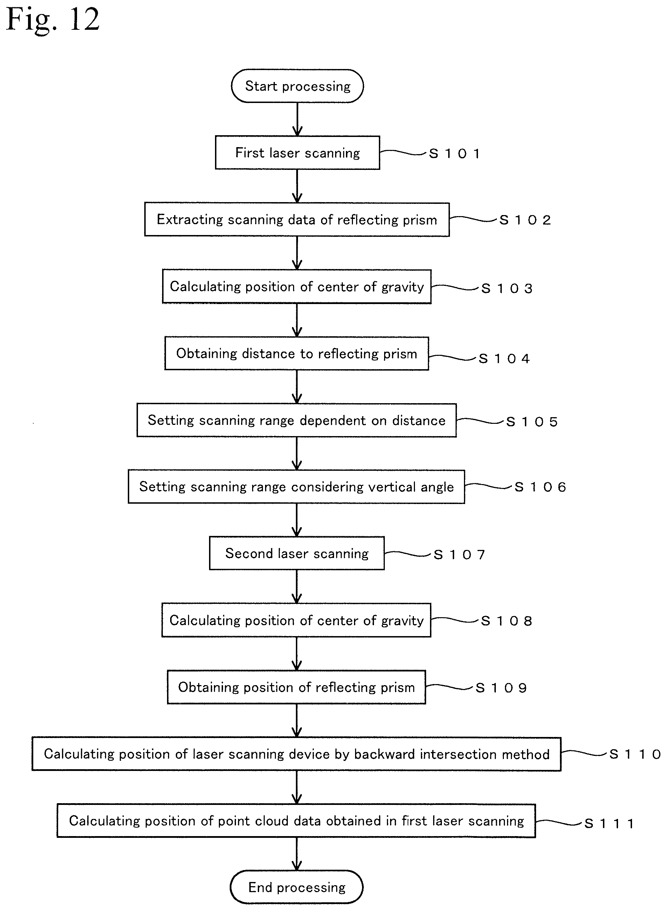

Fig. 12 is a flowchart diagram explaining one example of steps of processing. A program executing the processing of Fig. 12 is stored in the storing unit 216 or an appropriate storing medium, and executed by CPU of computer constructing the action controlling unit 217.

First, the first laser scanning is performed under the condition of Fig. 1 (Step S101). Here, the positions in the absolute coordinate system of the reflecting prisms 300 and 400 are known, and the position and orientation in the absolute coordinate system of the laser scanning device 200 is unknown. As a coordinate system, a local coordinate system can be used. The first laser scanning is performed for an object such as ground form, building or the like, and is performed with respect to all circumference under a general condition in which dimming taking into account intense reflection from the reflecting prism is not performed.

Among scanning data obtained by the first laser scanning, scanning data regarding reflection from the reflecting prisms 300 and 400 is extracted (Step S102). This processing is performed based on light receiving intensity of laser scanning light detected or detected wave shape thereof.

Next, position of gravity center of scanning data obtained in Step S102 is calculated (Step S103). In this way, positions of reflection center of the reflecting prisms 300 and 400 are determined. Next, distance (separated distance from the laser scanning device 200) to the gravity center position which is calculated in Step S102 is obtained (Step S104). In this way, distance L1 from the laser scanning device 200 to the reflecting prism 300 and distance L2 from the laser scanning device 200 to the reflecting prism 400 are obtained. In addition, direction of reflection center of the reflecting prism 300 viewed from the laser scanning device 200 and direction of reflection center of the reflecting prisms 400 viewed from the laser scanning device 200 are obtained.

Next, by the method explained above related to Fig. 5, scanning range is set according to distance considering the element 1 (Step S105). Here, setting of scanning range for accurate scanning of the reflection prism 300 according to the distance L1 and setting of scanning range for accurate scanning of the reflection prism 400 according to the distance L2 are performed.

In Step S105, the scanning range according to distance to the reflecting prism 300 is set in a situation in which direction of the reflecting prism 300 is center. Furthermore, in Step S105, the scanning range according to distance to the reflecting prism 400 is set in a situation in which direction of the reflecting prism 400 is center. It should be noted that the scanning range is set in a situation vertical angle is 0° in Step S105.

Next, with respect to the scanning range obtained in Step S105, the scanning range is set (corrected) considering the element 2 (Step S 106). As explained related to Fig. 9, since the scanning range becomes narrower as vertical angle is higher, in this processing, the scanning range is enlarged intendedly at high vertical angle. It should be noted that as a singular value, in a case in which vertical angle is 90°, a range of horizontal angle 360° is the scanning range (however, obtaining range of vertical scanning data is limited).

After Step S106, the second laser scanning is performed (Step S107). The second laser scanning is performed to the scanning range in which a specific range obtained at a step after Step S106 is focused on.

In the second laser scanning, the variable attenuator 211 is inserted in front of the light receiving unit 202, so that intensity of laser scanning light input into the light receiving unit 202 is decreased. In this way, saturation in the light receiving unit is avoided, and deterioration in ranging accuracy is restrained. Degree of dimming is adjusted based on intensity of detected light obtained in the first laser scanning and distance to the reflecting prism being an object.

For example, if the scanning range obtained in Step S106 is 90° to 91° of horizontal angle range and 5° to 6° of vertical angle range. It should be noted that horizontal angle is measured as 0° for north direction viewed from vertically upward, and is measured clockwise. Vertical angle is measured as 0° for horizontal direction and 90° for vertically upward.

In this case, scanning range in horizontal angle is set 3° to 8° for an extra range, and among scanning data obtained in the range, scanning data of range of 5° to 6° is employed. Scanning in vertical direction is performed with respect to all circumference (360°), and among scanning data obtained, scanning data of range of 0° to 1° is employed. In this way, processing can be performed efficiently.

Next, positions of gravity center of scanning data of the reflecting prisms 300 and 400 obtained by the second laser scanning are calculated (Step S108), and positions of reflection center of the reflecting prisms 300 and 400 are obtained based on the positions of gravity center (Step S109). Since position data obtained here has no problem of saturation in the light receiving element, accuracy is high.

After the positions of the reflecting prisms 300 and 400 are obtained, position and orientation in the absolute coordinate system of the laser scanning device 200 is calculated by the backward intersection method (Step S110). After the position and orientation in the absolute coordinate system of the laser scanning device 200 are calculated, by using them, position in the absolute coordinate system of each point of point cloud data obtained by the first laser scanning is calculated (Step S111).

Processing of Steps S110 and S111 are performed by using a computer for data processing, not using the laser scanning device 200. That is, the data of Step S109 is sent to the computer for data processing, and processing of Steps S110 and S111 are performed therein.

### (Superiority)

According to the present embodiment, appropriate scanning conditions are set in laser scanning. In this way, processing can be efficient.

### Explanation of Reference Numerals

200: Laser scanning device, 221: tripod, 223: horizontal rotating unit, 224: vertical rotating unit, 225: optical unit.

## Claims

1. laser scanning device comprising:
a distance obtaining unit which obtains distance from the laser scanning device to a specific object, and
a condition setting unit which performs setting of conditions to obtain laser scan data which is limited to the specific object,
wherein the laser scan data which is limited to the specific object is laser scan data of a specific angle range viewed from the laser scanning device, and
the specific angle range is set to be relatively narrow in a case in which the distance is relatively long, and is set to be relatively wide in a case in which the distance is relatively short.

2. The laser scanning device according to claim 1, wherein conditions are set so that laser scanning density in a unit angle range is set to be relatively large in a case in which the distance is relatively long, and
laser scanning density in a unit angle range is set to be relatively small in a case in which the distance is relatively short.

3. The laser scanning device according to claim 1 or 2, wherein the device further comprising:
a horizontal rotating unit which rotates horizontally, and
a vertical rotating unit which is arranged on the horizontal rotating unit, rotates vertically around horizontal direction regarding rotating axis, and includes an optical unit which irradiates laser scanning light to outside,
wherein the specific angle range includes angle range of horizontal direction,
the angle range of horizontal direction is adjusted based on position in vertical angle direction of the specific object, and
in the adjustment, the angle range of horizontal direction is enlarged in a case in which the position in vertical angle direction of the specific object is relatively high vertical angle position compared to a case in which the position in vertical angle direction of the specific object is relatively low vertical angle position.

4. The laser scanning device according to any one of claims 1 to 3,
wherein laser scanning light which is output from the laser scanning device has a cross-sectional shape of longitudinal shape,
the laser scanning light performs laser scanning by being reflected by a rotating mirror,
the cross-sectional shape of the laser scanning light is rotated depending on direction to which the laser scanning light is reflected by the mirror, and
conditions for obtaining the laser scan data are set depending on the direction to which the laser scanning light is reflected by the mirror.

5. laser scanning method using a laser scanning device, comprising steps of:
obtaining distance from the laser scanning device to a specific object, and
setting conditions to obtain laser scan data which is limited to the specific object,
wherein the laser scan data which is limited to the specific object is laser scan data of a specific angle range viewed from the laser scanning device, and
the specific angle range is set to be relatively narrow in a case in which the distance is relatively long, and is set to be relatively wide in a case in which the distance is relatively short.

6. program for control of laser scanning by a laser scanning device made to, when read and executed by a computer processor, cause the computer processor to:
obtain distance from the laser scanning device to a specific object, and
set conditions to obtain laser scan data which is limited to the specific object,
wherein the laser scan data which is limited to the specific object is laser scan data of a specific angle range viewed from the laser scanning device, and
the specific angle range is set to be relatively narrow in a case in which the distance is relatively long, and is set to be relatively wide in a case in which the distance is relatively short.
